# EUROPÄISCHE PATENTSCHRIFT

(11) **EP 3 594 639 B1**
(45) Veröffentlichungstag und Bekanntmachung des Hinweises auf die Patenterteilung: **28.09.2022**
(21) Anmeldenummer: 18183382.3
(22) Anmeldetag: 13.07.2018
(51) Int. Cl.: G01F 23/263

(54) **VORRICHTUNG UND VERFAHREN ZUR KAPAZITIVEN FÜLLSTANDSMESSUNG IN FLÜSSIGKEITSBEHÄLTERN**
DEVICE AND METHOD FOR CAPACITATIVE FILL LEVEL MEASUREMENT IN LIQUID CONTAINERS
DISPOSITIF ET PROCÉDÉ DE MESURE CAPACITIVE DE NIVEAU DE REMPLISSAGE DANS DES RÉSERVOIRS DE LIQUIDE

(43) Veröffentlichungstag der Anmeldung: 15.01.2020
(73) Patentinhaber: TECAN TRADING AG, 8708 Männedorf (CH)
(72) Erfinder: DIETRICH, Pascal, 8623 Wetzikon (CH); FREI, Luca, 8645 Rapperswil SG (CH); OTT, Philipp, 8496 Steg (CH)
(74) Vertreter: Troesch Scheidegger Werner AG

(56) Entgegenhaltungen:
- EP-A1- 2 371 454
- DE-A1-102013 005 963
- DE-U1-202015 101 687
- JP-A- H10 123 149
- US-B1- 7 509 856
- US-B2- 7 836 762

## Beschreibung

### TECHNISCHES GEBIET DER ERFINDUNG

Die vorliegende Erfindung ist dem technischen Gebiet der automatisierten Laborsysteme bzw. -anlagen, wie beispielsweise medizinische, chemische, pharmazeutische oder forensische Analysegeräte, zugeordnet und betrifft spezifisch Flüssigkeitsbearbeitungssysteme, im Speziellen eine Vorrichtung sowie ein entsprechendes Verfahren zur kapazitiven Füllstandsmessung in Flüssigkeitsbehältern.

### HINTERGRUND DER ERFINDUNG

Wenn in medizinischen, chemischen, analytischen, pharmazeutischen oder forensischen Labors grosse Mengen an Proben zu untersuchen sind, werden heute meist automatisierte Laborsysteme bzw. -anlagen eingesetzt, welche eine rasche und zuverlässige Verarbeitung jeder einzelnen Probe ermöglichen. Solche Laborsysteme sind oftmals als Flüssigkeitsbearbeitungssysteme auf die Handhabung von Flüssigkeitsvolumina ausgelegt. Dabei werden üblicherweise ein oder mehrere Roboter für den vollautomatischen Betrieb solcher Laborsysteme eingesetzt. Diese Roboter sind insbesondere auf den Umgang mit Flüssigkeitsbehältern spezialisiert und werden daher im Fachjargon als "Liquid Handling Roboter" bezeichnet. Die Proben werden meist in Probenbehältern, wie z.B. Probenröhrchen, von denen mehrere in einer Trägereinheit (im Fachjargon auch "Rack" genannt) angeordnet sind, angeliefert. Zudem werden oftmals Reagenzien, welche im Verlauf der Probenbearbeitung den Proben beigefügt werden, in Gefässen wie Fläschchen oder Trögen bereitgestellt.

Die Probenröhrchen und Reagenziengefässe weisen bei der Bereitstellung zur Verarbeitung durch das Flüssigkeitsbearbeitungssystem üblicherweise unterschiedlich Füllstände auf oder sind in manchen Fällen sogar leer. Um eine rasche und effiziente Bearbeitung zu gewährleisten sollte der Füllstand der einzelnen Flüssigkeitsbehälter bekannt sein bevor der Roboter seine Arbeit aufnimmt. Insbesondere sollten leere Behälter identifiziert werden können, und das System sollte z.B. auch in der Lage sein zu erkennen, ob sich überhaupt ein Probenröhrchen in einer bestimmten Aufnahme der Trägereinheit befindet, was für ein Typ Probenröhrchen sich in einer bestimmten Aufnahme der Trägereinheit befindet, oder um was für eine Art Trägereinheit es sich handelt. Zudem kann es auch hilfreich sein, bestimmte Merkmale an einer Trägereinheit zu erkennen.

Es besteht daher der Bedarf nach Mitteln, welche eine einfache (und folglich kostengünstige) sowie zuverlässige Bestimmung der oben genannten Merkmale in automatisierten Flüssigkeitsbearbeitungssystemen erlauben und damit eine effizientere Verarbeitung von grossen Mengen an Proben ermöglichen.

Die US 7,509,856 B1 beschreibt einen kapazitiven Sensor zur Detektion des Füllstandes eines Mediums in einem Behälter, wobei der störende Einfluss der kapazitiven Eigenschaften des Behälters zu einem wesentlichen Teil neutralisiert wird. Dazu wird eine Kompensationselektrode oberhalb einer Messelektrode angebracht, sodass das elektrische Feld zwischen diesen beiden Elektroden zu einem wesentlichen Teil durch die Behälterwand verläuft, wobei die Kompensationskapazität, welche durch die Elektroden sowie die Behälterwand als Dielektrikum gebildet wird, dem störenden Einfluss der Behälterkapazität entgegenwirkt.

Die US 7,836,762 B2 betrifft eine Vorrichtung, bei welcher eine Vielzahl von Flaschen hintereinander durch eine Messzelle zur Messung der Füllmenge gefördert werden, wobei die Messzelle einen Messabschnitt aufweist, dem ein erster Schutzabschnitt vorangestellt ist und auf den ein zweiter Schutzabschnitt folgt. Die beiden Schutzabschnitte dienen zum Verkleinern des Einflusses der benachbarten Flaschen auf die Messung.

### ZUSAMMENFASSUNG DER ERFINDUNG

Es ist eine Aufgabe der vorliegenden Erfindung eine Vorrichtung zur Füllstandsmessung in Flüssigkeitsbehältern bereitzustellen, mit deren Hilfe eine präzise Erfassung des Füllstands der einzelnen Flüssigkeitsbehälter bereits bei der Bereitstellung für die nachfolgende Verarbeitung durch den Liquid Handling Roboter ermöglicht wird. Diese Aufgabe wird erfindungsgemäss durch die in Anspruch 1 festgelegte Messvorrichtung erfüllt.

Es ist zudem eine Aufgabe der vorliegenden Erfindung ein entsprechendes Verfahren zur Füllstandsmessung bereitzustellen, welches eine präzise Erfassung des Füllstands der einzelnen Flüssigkeitsbehälter bereits bei der Bereitstellung für die nachfolgende Verarbeitung durch den Liquid Handling Roboter ermöglicht. Diese Aufgabe wird erfindungsgemäss durch das in Anspruch 12 vorgeschlagene Messverfahren gelöst.

Spezifische erfindungsgemässe Ausführungsvarianten werden in den abhängigen Ansprüchen angegeben.

Eine erfindungsgemässe Vorrichtung zur kapazitiven Füllstandsmessung in Flüssigkeitsbehältern, insbesondere Behälter (wie Tröge oder Fläschchen) für Reagenzien oder Probenröhrchen, umfasst:
- ein Sensor mit einer Messelektrode;
- eine leitende Bodenplatte geeignet zum Anordnen von mindestens einem Flüssigkeitsbehälter oder einer Trägereinheit mit mindestens einer Aufnahme zum Aufnehmen eines Flüssigkeitsbehälters, insbesondere eines Probenröhrchens; und
- eine Sensorelektronikeinheit, welche mit der Messelektrode und der Bodenplatte verbunden ist und zum Bestimmen einer Kapazität (bzw. Impedanz) zwischen der Messelektrode und der Bodenplatte ausgeführt ist,

wobei die Messelektrode im Wesentlichen senkrecht zur Bodenplatte angeordnet ist, insbesondere vertikal zur horizontal angeordneten Bodenplatte angeordnet ist,
wobei die Messelektrode auf einer Vorderseite eines Sensorträgers zwischen einer ersten und einer zweiten Guardelektrode angeordnet ist,
wobei auf einer Hinterseite oder einer Zwischenschicht des Sensorträgers eine dritte Guardelektrode angeordnet ist,
wobei die dritte Guardelektrode (von der Messelektrode sowie der ersten und zweiten Guardelektrode elektrisch isoliert ist und) mindestens die Messelektrode (von hinten) überdeckt, insbesondere die Messelektrode sowie die erste und zweite Guardelektrode überdeckt,
wobei die Messelektrode sowie die erste und zweite Guardelektrode zwischen einer ersten und einer zweiten Masseelektrode angeordnet sind,
wobei die erste und zweite Masseelektrode ihrerseits zwischen einer vierten und fünften Guardelektrode angeordnet sind, wobei die erste und zweite Masseelektrode elektrisch mit der Bodenplatte verbunden sind.

In einer Ausführungsvariante der Vorrichtung ist die Messelektrode auf einer Vorderseite eines Sensorträgers oberhalb einer Guardelektrode angeordnet, wobei sich die Guardelektrode insbesondere zwischen der Messelektrode und der Bodenplatte befindet.

In einer weiteren Ausführungsvariante der Vorrichtung sind die Messelektrode, die Guardelektroden und die Masseelektroden streifenförmig ausgeführt, und sind beim Betrieb der Vorrichtung vertikal und insbesondere parallel zu einer Längsachse des Flüssigkeitsbehälters, insbesondere des Probenröhrchens, ausgerichtet.

In einer weiteren Ausführungsvariante der Vorrichtung weist die Messelektrode eine Breite im Bereich von 80 % bis 100 % des Durchmessers des Flüssigkeitsbehälters, insbesondere des Probenröhrchens, auf, und die erste und zweite Guardelektrode weisen insbesondere je eine Breite von über 100 % des Durchmessers des Flüssigkeitsbehälters, insbesondere des Probenröhrchens, auf.

In einer weiteren Ausführungsvariante der Vorrichtung umfasst die Sensorelektronikeinheit ein Signalgenerator, mit welchem ein Signal zum Anregen der Messelektrode erzeugbar ist, wobei das Signal insbesondere ein sinusförmiges Signal mit einer Frequenz im Bereich von 20 kHz bis 400 kHz oder ein treppenstufenförmiges Signal mit einer Frequenz im Bereich von 20 kHz bis 50 kHz ist, wobei die Frequenz insbesondere unterschiedlich einstellbar ist. Es sei angemerkt, dass das Signal nicht nur Signalanteile (genau) bei der erwähnten Frequenz aufweisen muss, sondern nebst dieser Frequenz zusätzliche Signalanteile bei anderen Frequenzen in einem Frequenzbereich um die erwähnte Frequenz herum umfassen kann. Für eine Schaumdetektion oder zur Unterscheidung zwischen verschiedenen Flüssigkeiten, insbesondere Reagenzien, mit unterschiedlichen Impedanzspektren (wie dies beides unten angegeben wird) werden auch Signale mit einer Frequenz von mehreren Megahertz, z.B. von 12 MHz, verwendet.

In einer weiteren Ausführungsvariante der Vorrichtung wird das Signal zum Anregen der Messelektrode ebenfalls zum Anregen der Guardelektroden verwendet, wobei das Signal zum Anregen der Guardelektroden niederohmig ist, und insbesondere mit einem Pufferverstärker mit Spannungsverstärkung 1 aus dem Signal zum Anregen der Messelektrode erzeugt wird.

In einer weiteren Ausführungsvariante der Vorrichtung ist der Sensorträger als Leiterplatte ausgeführt, insbesondere als mehrlagige Leiterplatte.

In einer weiteren Ausführungsvariante der Vorrichtung ist die Sensorelektronikeinheit auf derselben Leiterplatte untergebracht wie der Sensor, wobei die Leiterplatte mindesten zwei Zwischenschichten zwischen der Vorderseite und der Hinterseite aufweist, wobei sich die Messelektrode sowie die allfällige erste und zweite Guardelektrode sowie die allfällige erste und zweite Masseelektrode sowie die allfällige vierte und fünfte Guardelektrode auf der Vorderseite der Leiterplatte befinden, die allfällige dritte Guardelektrode sich auf einer ersten Zwischenschicht hinter der Vorderseite befindet, eine Massefläche als Abschirmung sich auf einer zweiten Zwischenschicht hinter der ersten Zwischenschicht befindet, wobei die Abschirmung mit der allfälligen ersten und zweiten Masseelektrode elektrisch verbunden ist, und Leiterbahnen für eine Signalführung der Sensorelektronikeinheit sich auf der Hinterseite und allenfalls einer oder mehrerer weiteren Zwischenschichten zwischen der Hinterseite und der Massenfläche befinden.

In einer weiteren Ausführungsvariante umfasst die Vorrichtung weiter eine Auswerteeinheit, welche dazu ausgeführt ist, basierend auf der Kapazität mindestens eines aus folgender Liste zu erkennen:
- einen Füllstand des Flüssigkeitsbehälters, insbesondere des Probenröhrchens, insbesondere ob der Flüssigkeitsbehälter, insbesondere das Probenröhrchen, leer ist und/oder einen vorgegebenen Füllstand über- oder unterschreitet;
- ob sich ein Flüssigkeitsbehälter, insbesondere ein Probenröhrchen, in der mindestens einen Aufnahme befindet;
- unterschiedliche Trägereinheiten, wie z.B. Trägereinheiten für unterschiedlich grosse Flüssigkeitsbehälter, insbesondere Probenröhrchen;
- unterschiedliche Merkmale an einer Trägereinheit, wie z.B. einzelne Aufnahmen, insbesondere Unterteilungen zwischen den Aufnahmen.

In einer weiteren Ausführungsvariante umfasst die Vorrichtung weiter:
- eine optische Erkennungseinheit mit einem optischen Sensorelement; und
- eine Steuereinheit zum Steuern der optischen Erkennungseinheit,
wobei die Steuereinheit mit der Sensorelektronikeinheit bzw. der Auswerteeinheit verbunden ist, und von der Sensorelektronikeinheit bzw. der Auswerteeinheit ein Steuersignal in Abhängigkeit von der Kapazität erzeugbar ist, und die optische Erkennungseinheit in Abhängigkeit des Steuersignals steuerbar ist, insbesondere ein Prozess zum Erkennen von Kennzeichen an und/oder Merkmalen von dem Flüssigkeitsbehälter, insbesondere einem Probenröhrchen, und/oder von einem/einer darin befindlichen Reagenz oder Probe auslösbar ist.

In einer weiteren Ausführungsvariante der Vorrichtung ist die Messelektrode neben der Bodenplatte angeordnet.

Gemäss einem weiteren Aspekt der vorliegenden Erfindung umfasst ein Verfahren zur kapazitiven Füllstandsmessung in Flüssigkeitsbehältern, insbesondere Behälter für Reagenzier oder Probenröhrchen, die Schritte:
- Bereitstellen einer leitenden Bodenplatte, welche horizontal angeordnet ist, und eines Sensors mit einer Messelektrode, welche vertikal angeordnet ist, und einer Sensorelektronikeinheit, welche mit der Messelektrode und der Bodenplatte verbunden ist;
- Anordnen eines Flüssigkeitsbehälters oder einer Trägereinheit mit mindestens einer Aufnahme zum Aufnehmen eines Flüssigkeitsbehälters, insbesondere eines Probenröhrchens, auf der Bodenplatte neben der Messelektrode;
- Anregen der Messelektrode mit einem Signal;
- Bestimmen eines Messsignals in Abhängigkeit einer Kapazität (bzw. Impedanz) zwischen der Messelektrode und der Bodenplatte; und
- Bestimmen eines Füllstands des Flüssigkeitsbehälters, insbesondere eines Probenröhrchens, welches sich in der Trägereinheit befindet, basierend auf dem Messsignal, wobei die Messelektrode auf einer Vorderseite eines Sensorträgers zwischen einer ersten und einer zweiten Guardelektrode angeordnet ist,wobei auf einer Hinterseite oder einer Zwischenschicht des Sensorträgers eine dritte Guardelektrode mindestens dies Messelektrode sowie die erste und zweite Guardelektrode überdeckt, wobei die Messelektrode sowie die erste und zweite Guardelektrode zwischen einer ersten und zweiten Masseelektrode angeordnet sind, und wobei die erste und zweite Masseelektrode ihrerseits zwischen einer vierten und fünften Guardelektrode angeordnet sind, und wobei die erste und zweite Masseelektrode elektrisch mit der Bodenplatte verbunden sind.

In einer Ausführungsvariante umfasst das Verfahren weiter den Schritt:
- Bewegen einer Trägereinheit mit einer Vielzahl von Aufnahmen zum Aufnehmen von Probenröhrchen in horizontaler Richtung an der Messelektrode vorbei,
wobei das Bestimmen des Messsignals während dem Bewegen der Trägereinheit an der Messelektrode vorbei geschieht.

In einer weiteren Ausführungsvariante umfasst das Verfahren weiter den Schritt:
- Erkennen ob sich ein Probenröhrchen in einer bestimmten Aufnahme der Trägereinheit befindet basierend auf dem Messsignal ;
- Erkennen was für ein Typ Probenröhrchen sich in einer bestimmten Aufnahme der Trägereinheit befindet basierend auf dem Messsignal ;
- Erkennen um was für eine Art Trägereinheit es sich handelt basierend auf dem Messsignal, wie z.B. eine Trägereinheit geeignet zum Aufnehmen von Probenröhrchen einer bestimmten Grösse bzw. maximalen Füllmenge.

### KURZE BESCHREIBUNG DER ZEICHNUNGEN

Nichtlimitierende Ausführungsbeispiele der vorliegenden Erfindung werden nachstehend anhand von Figuren noch näher erläutert. Es zeigen:
- Fig. 1: schematisch in einer Seitenansicht eine Ausführungsvariante einer nicht erfindungsgemässen Vorrichtung zur kapazitiven Füllstandsmessung;
- Fig. 2 a): schematisch in einer Seitenansicht eine Trägereinheit mit mehreren Probenröhrchen,
- b): schematisch in einer Ansicht von oben eine Ausführungsvariante einer nicht erfindungsgemässen Vorrichtung zur kapazitiven Füllstandsmessung in den Probenröhrchen gemäss Fig. 2 a),
- c): schematische Darstellung inklusive Andeutung der elektrischen Ersatzschaltung der Ausführungsvariante gemäss Fig. 2 a) & b);

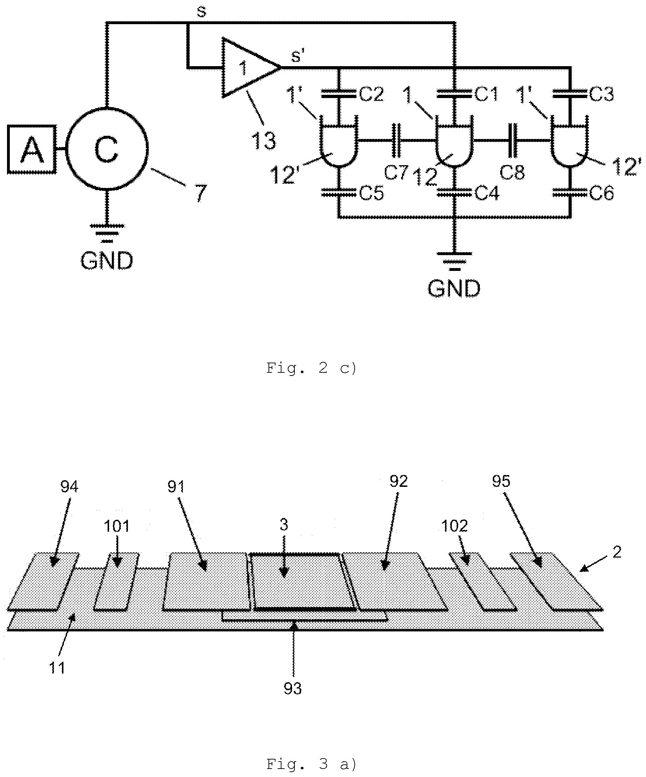

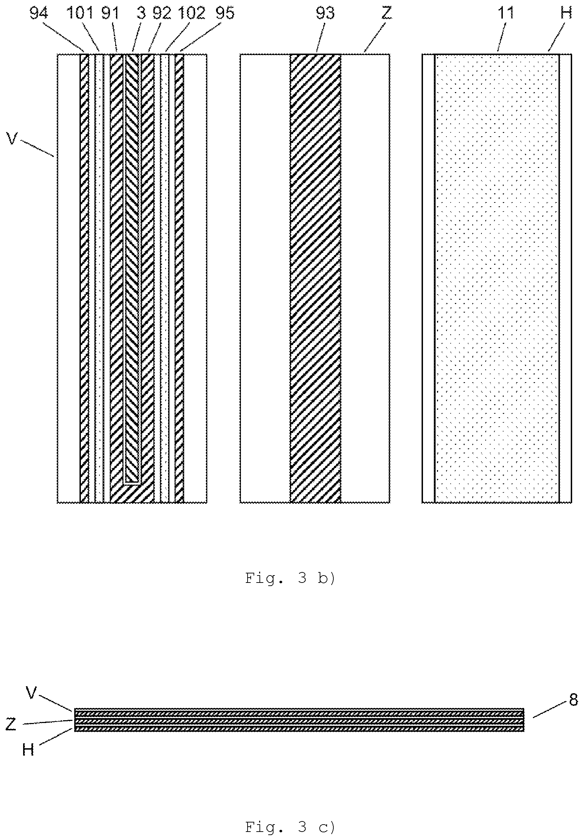

- Fig. 3 a): eine weitere Ausführungsvariante eines erfindungsgemässen Sensors,
- b): Ansicht der Vorderseite (links) sowie der Zwischenschicht und der Massefläche (rechts) des Sensors gemäss Fig. 3 a),
- c): Seitenprofil des Sensors gemäss Fig. 3 a) & b) mit der Vorderseite, der Zwischenschicht und dahinter der Schicht mit der Massefläche;

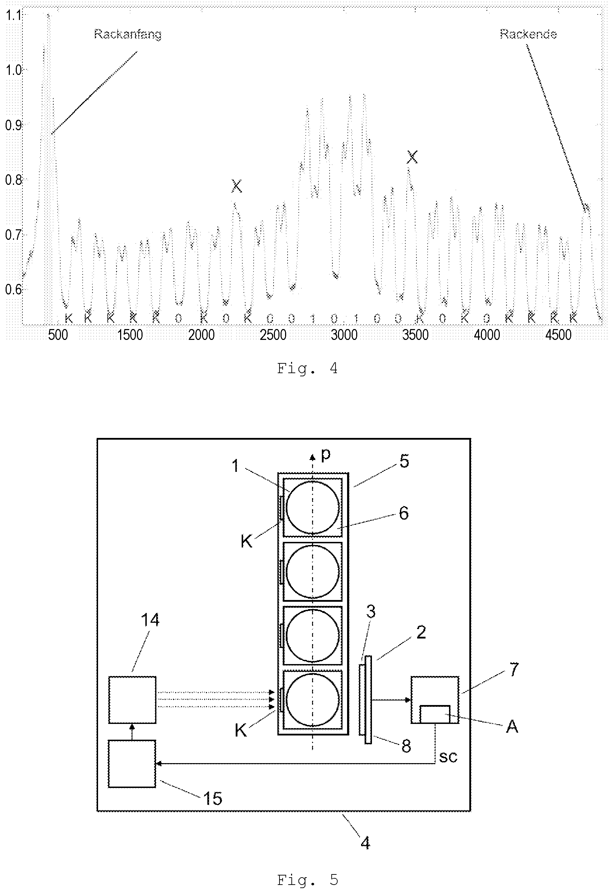

- Fig. 4: gemessener Verlauf der Kapazität über die Zeit beim Vorbeischieben einer Trägereinheit mit Probenröhrchen am Sensor gemäss Fig. 3; und
- Fig. 5: schematisch eine weitere Ausführungsvariante einer erfindungsgemässen Vorrichtung zur Füllstandsmessung, welche zusätzlich eine optische Erkennungseinheit aufweist, die abhängig von der gemessenen Kapazität gesteuert wird.

In den Figuren stehen gleiche Bezugszeichen für gleiche Elemente.

### DETAILLIERTE BESCHREIBUNG DER ERFINDUNG

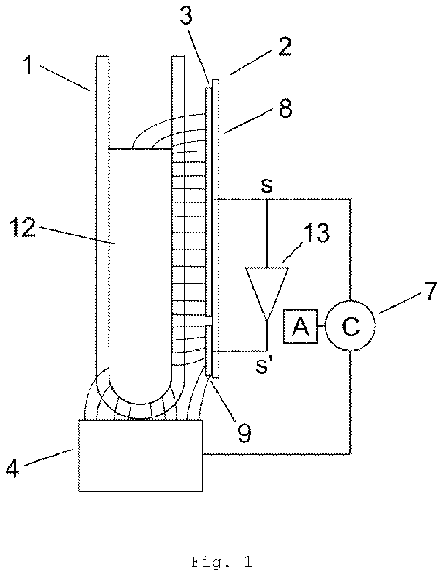

Fig. 1 zeigt schematisch in einer Seitenansicht eine beispielhafte Ausführungsvariante einer nicht erfindungsgemässen Anordnung zur kapazitiven Füllstandsmessung. Dazu wird ein Flüssigkeitsbehälter, hier ein Probenröhrchen 1 über einer leitenden, horizontalen Bodenplatte (bzw. Arbeitsfläche) 4 und neben einem Sensor 2 mit einer Messelektrode 3 angeordnet. Die Messelektrode 3 und die Bodenplatte 4 sind mit einer Sensorelektronikeinheit 7 verbunden, welche zum Bestimmen der Kapazität zwischen der Messelektrode 3 und der Bodenplatte 4 ausgeführt ist. Typischerweise ist die Bodenplatte 4 geerdet bzw. liegt auf einem Referenzpotential. Um die Kapazität zu messen wird die Messelektrode 3 mit einem Signal s, welches von einem Signalgenerator in der Sensorelektronikeinheit 7 erzeugt wird, angeregt. Aufgrund des Signals s bildet sich ein elektrisches Feld zwischen der Messelektrode 3 und der Bodenplatte 4, wobei die Feldlinien durch die Flüssigkeit 12 hindurchgeleitet werden. Je nach der Menge der Flüssigkeit 12 im Probenröhrchen 1, also je nach Füllstand, verändert sich die gemessene Kapazität.

Optional kann der Sensor 2 nebst der Messelektrode 3 zusätzlich eine Guardelektrode 9 umfassen, welche zusammen mit der Messelektrode 3 auf einem Sensorträger 8 angeordnet ist. Die Guardelektrode 9 wird mit einem niederohmigen Signal s' angeregt, welches durch Anlegen des Signals s an einen Pufferverstärker 13 mit Spannungsverstärkung 1 erzeugt werden kann. Mittels der Guardelektrode 9 kann das elektrische Feld in einer gewünschten Weise fokussiert werden, wodurch sichergestellt wird, dass die Feldlinien von der Messelektrode 3 durch die Flüssigkeit 12 geführt und nicht direkt in die Bodenplatte 4 geleitet werden, was die Genauigkeit der Füllstandsmessung erhöht.

Der in Fig. 1 dargestellte Sensor 2 eignet sich gut, wenn jeweils nur ein einzelner Flüssigkeitsbehälter, wie z.B. ein Trog oder Fläschchen mit einem Reagenz oder Reinigungsmittel, vor die beschriebene Elektrodenanordnung gestellt wird, um dessen Füllstand zu ermitteln. Werden hingegen mehrere, nahebeieinander angeordnete Flüssigkeitsbehälter, wie z.B. eine Vielzahl von Probenröhrchen 1 in einer Trägereinheit (Rack) 5, zusammen am Sensor 2 vorbeigeführt, so wird ein Teil der Feldlinien von der Messelektrode 3 durch die Flüssigkeit 12' der benachbarten Probenröhrchen 1' geführt, wodurch die Messung des Füllstands des gewünschten Probenröhrchen 1 durch den Füllstand der benachbarten Probenröhrchen 1' verfälscht werden kann.

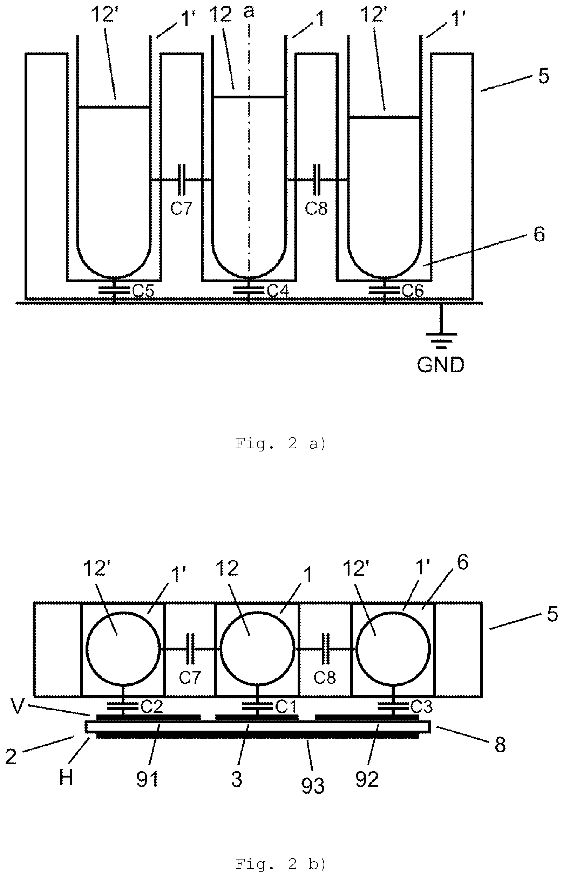

In Fig. 2 wird eine Ausführungsvariante eines nicht erfindungsgemässen Sensors 2 gezeigt, welcher das oben beschriebene Problem gelöst, indem das von benachbarten Probenröhrchen 1' verursachte "Übersprechen" stark vermindert wird.

Fig. 2 a) zeigt schematisch in einer Seitenansicht eine Trägereinheit 5 mit mehreren Probenröhrchen 1, welche alle Flüssigkeit 12, 12' enthalten. Der Sensor 2 ist in dieser Darstellung nicht sichtbar, steht jedoch vor den drei abgebildeten Probenröhrchen 1, 1' deren Längsachse a senkrecht zur horizontalen Bodenplatte 4 steht. In Fig. 2 b) wird diese Anordnung von oben gezeigt, hier mit dem Sensor 2. Wie man nun sehen kann, liegt bei diesem Sensor 2 die Messelektrode 3 zwischen zwei Guardelektroden 91, 92, welche links und rechts der Messelektrode 3 angeordnet sind. Die Messelektrode 3 sowie die beiden Guardelektroden 91, 92 sind auf der Vorderseite V einer Leiterplatte, die als Sensorträger 8 dient, angeordnet. Auf der Hinterseite H des Sensorträgers 8 ist eine weitere Guardelektrode 93 angeordnet, welche von hinten sowohl die Messelektrode 3 als auch die beiden vorderen Guardelektroden 91, 92 überdeckt. Durch diese Elektrodenanordnung entsteht ein elektrisches Feld, welches einerseits die Messelektrode 3 mit der Flüssigkeit 12 im davor stehenden Probenröhrchen 1 koppelt (angedeutet durch die Kapazität C1) und die beiden seitlichen Guardelektroden 91, 92 mit der Flüssigkeit 12' in den vor ihnen stehenden Probenröhrchen 1' koppelt (angedeutet durch die Kapazitäten C2 & C3) und andererseits die Flüssigkeit 12, 12' in den drei Probenröhrchen 1, 1' mit der geerdeten Bodenplatte 4 koppelt (angedeutet durch die Kapazitäten C4, C5 & C6). Trotz der Guardelektroden 91, 92 wird immer noch ein kleiner Teil des elektrischen Feldes von der Flüssigkeit 12' in den beiden seitlichen Probenröhrchen 1' in die Flüssigkeit 12 im mittleren Probenröhrchen 1, dessen Füllstand zu messen ist, eingestreut (angedeutet durch die Kapazitäten C7 & C8). Die Kapazitäten C7 & C8 sind allerdings vergleichsweise klein gegenüber der Kapazität C1+C4.

Fig. 2 c) zeigt eine schematische Darstellung inklusive Andeutung der elektrischen Ersatzschaltung der Ausführungsvariante gemäss Fig. 2 a) & b) mit der Sensorelektronikeinheit 7, welche einen Signalgenerator enthält, der das Signal s zum Anregen der Messelektrode 3 liefert, sowie dem Pufferverstärker 13 mit Verstärkung 1, welcher dieses Signal s als niederohmiges Signal s' den beiden Guardelektroden 91, 92 zuführt.

Um das "Übersprechen" bzw. die Verkopplung der Probenröhrchen 1, 1' (bzw. der darin befindlichen Flüssigkeiten 12, 12') weiter zu reduzieren, wird die in Fig. 3 illustrierte Ausführungsvariante vorgeschlagen.

In der Fig. 3 a) wird ein streifenförmiger Ausschnitt des Sensors 2 in einer perspektivischen Darstellung gezeigt. Bei dieser Ausführungsvariante sind zusätzliche auf der Vorderseite V des Sensorträgers 8 je links und rechts der Messelektrode 3 und der beiden Guardelektroden 91, 92 eine Masseelektrode 101, 102 und eine weitere Guardelektrode 94, 95 angeordnet. Durch die gezeigte Anordnung der beiden seitlichen Masseelektrode 101, 102 werden im elektrischen Feld zwischen den drei Proberöhrchen 1, 1' Nullstellen erzeugt.

In der Abbildung von Fig. 3 b) sind in einer Ansicht von vorne auf der linken Seite die vollständige Vorderseite V des Sensorträgers 8 dargestellt mit der linken, äusseren Guardelektrode 94, der linken Masseelektrode 101, der linken, inneren Guardelektrode 91, der Messelektrode 3, der rechten, inneren Guardelektrode 92, der rechten Masseelektrode 102 sowie der rechten, äusseren Guardelektrode 95, welche allesamt streifenförmig ausgeführt sind, in der Mitte die Zwischenschicht Z mit der Guardelektrode 93, und auf der rechten Seite die Hinterseite H mit der Massefläche 11. Die Länge der Elektrodenstreifen entspricht in etwa der Höhe der Probenröhrchen 1. Als Detail sei noch zu beachten, das sich am unteren Ende der Messelektrode 3 noch ein Stück Guardelektrode 9 befindet, wie dies auch in Fig. 1 gezeigt wird, um sicherzustellen, dass die Feldlinien des elektrischen Feldes von der Messelektrode 3 via die Flüssigkeit 12 im Probenröhrchen 1 zur Bodenplatte 4 gelangen und nicht direkt von der Messelektrode 3 zur Bodenplatte 4 verlaufen und die Flüssigkeit 12 im Probenröhrchen 1 umgehen, wodurch die Füllstandsmessung verfälscht und somit ungenau würde.

Fig. 3 c) zeigt noch ein (um 90 Grad in die Horizontale gedrehtes) Seitenprofil des mehrlagigen Sensorträgers 2, welcher z.B. als mehrlagige Leiterplatte ausgeführt ist, mit der Vorderseite V mit den sieben streifenförmigen Elektroden 94, 101, 91, 3, 92, 102 & 95, der Zwischenschicht Z mit der breiten streifenförmigen Guardelektrode 93 und der Hinterseite H mit der noch breiteren Massefläche 11, welche alle vor ihr liegenden Elektrodenstreifen von hinten überdeckt.

In Fig. 4 ist der gemessene Verlauf der Kapazität über die Zeit beim Vorbeischieben einer Trägereinheit 5 mit 24 Aufnahmen 6 für Probenröhrchen 1 am Sensor 2 gemäss Fig. 3 dargestellt. In der Grafik bedeuten die Beschriftungen "K" = kein Probenröhrchen in der Aufnahme, "0" = keine Flüssigkeit im Probenröhrchen (leer), "1" = Probenröhrchen vollgefüllt (mit 6 ml Flüssigkeit 12). Die gemessene Kurve weist jeweils Spitzen auf bei den Begrenzungen zwischen den Aufnahmen 6, sowie insbesondere an denjenigen Stellen, wo Teile der Trägereinheit 5 zusammengefügt sind, da sich dort jeweils eine etwas breitere Begrenzung befindet (s. mit "X" markierte Stellen in Fig. 4). Der Füllstand der Probenröhrchen 1 geht aus der Höhe der Vertiefungen zwischen diesen Spitzen hervor. Es ist auch gut erkennbar, wenn sich kein Probenröhrchen 1 in einer Aufnahme 6 befindet (s. mit "K" markierte Stellen in Fig. 4). Das Übersprechen ist sehr gering und beträgt maximal 10 % der Grundkapazität C1+C4. Dabei ist das Ausmass des Übersprechens vom Füllstand der beiden benachbarten Probenröhrchen 1' abhängig. Ist der Füllstand der beiden benachbarten Probenröhrchen 1' (ungefähr) bekannt, so kann das Übersprechen berechnet/abgeschätzt und kompensiert werden.

Zum Schluss zeigt Fig. 5 schematisch eine weitere Ausführungsvariante einer erfindungsgemässen Vorrichtung zur Füllstandsmessung, welche zusätzlich eine optische Erkennungseinheit 14 aufweist, die abhängig von der gemessenen Kapazität gesteuert wird. Die Probenröhrchen 1 weisen meist ein Kennzeichen K, wie beispielsweise ein ein-(1D) oder zweidimensionaler (2D) Barcode, der auf einer auf dem Probenröhrchen 1 angebrachten Etikette aufgedruckt ist, auf, sodass z.B. Informationen betreffend die Herkunft der Probe im Probenröhrchen 1 dieser eindeutig zugeordnet werden können. Vor der Verarbeitung der Proben muss dann jeweils das Kennzeichen K auf jedem Probenröhrchen 1 mittels der optischen Erkennungseinheit 14 gelesen werden. Dazu muss die optischen Erkennungseinheit 14 wissen wann ein Probenröhrchen 1 vor ihr angeordnet ist, um das Kennzeichen K zu Lesen. Diese Information kann z.B. von einer Auswerteeinheit A in der Sensorelektronikeinheit 7 geliefert werden, sobald diese feststellt, dass sich ein Probenröhrchen 1 vor dem Sensor 2 befindet. Wie man der Fig. 5 entnehmen kann, wird die Trägereinheit 5 mit Probenröhrchen 1 in den Aufnahmen 6 am Sensor 2 entlang des Pfades p vorbeibewegt. Sobald die Auswerteeinheit A ein bestimmtes Merkmal an der Trägereinheit 5 erkannt oder einen vorgebaren Mindestfüllstand gemessen hat wird ein Steuersignal sc erzeugt, das der Steuereinheit 15, welche die optische Erkennungseinheit 14 steuert, signalisiert, dass ein Kennzeichen K gelesen werden soll.

### LISTE DER BEZUGSZEICHEN

- 1, 1': Flüssigkeitsbehälter, Trog, Probenröhrchen
- 2: Sensor
- 3: Messelektrode
- 4: Bodenplatte
- 5: Trägereinheit
- 6: Aufnahme
- 7: Sensorelektronikeinheit
- 8: Sensorträger (mit Vorderseite V, Hinterseite H, Zwischenschicht Z)
- 9: Guardelektrode
- 91: erste Guardelektrode
- 92: zweite Guardelektrode
- 93: dritte Guardelektrode
- 94: vierte Guardelektrode
- 95: fünfte Guardelektrode
- 101: erste Masseelektrode
- 102: zweite Masseelektrode
- 11: Massefläche
- 12, 12': Flüssigkeit
- 13: Pufferverstärker
- 14: optische Erkennungseinheit
- 15: Steuereinheit
- A: Auswerteeinheit
- a: Längsachse eines Probenröhrchens
- C1...C8: (Teil-) Kapazität
- GND: Ground, Erdpotential
- H: Hinterseite des Sensorträgers
- K: Kennzeichen
- p: Einschubpfad der Trägereinheit
- s: Signal zum Anregen der Messelektrode
- s': Signal zum Anregen der Guardelektroden
- sc: Steuersignal
- V: Vorderseite des Sensorträgers
- Z: Zwischenschicht des Sensorträgers

## Patentansprüche

1. Vorrichtung zur kapazitiven Füllstandsmessung in Flüssigkeitsbehältern (1), insbesondere Behälter für Reagenzien oder Probenröhrchen, umfassend:
- ein Sensor (2) mit einer Messelektrode (3);
- eine leitende Bodenplatte (4) geeignet zum Anordnen von mindestens einem Flüssigkeitsbehälter (1) oder einer Trägereinheit (5) mit mindestens einer Aufnahme (6) zum Aufnehmen eines Flüssigkeitsbehälters (1), insbesondere eines Probenröhrchens; und
- eine Sensorelektronikeinheit (7), welche mit der Messelektrode (3) und der Bodenplatte (4) verbunden ist und zum Bestimmen einer Kapazität zwischen der Messelektrode (3) und der Bodenplatte (4) ausgeführt ist,
wobei die Messelektrode (3) im Wesentlichen senkrecht zur Bodenplatte (4) angeordnet ist, insbesondere vertikal zur horizontal angeordneten Bodenplatte (4) angeordnet ist,
wobei die Messelektrode (3) auf einer Vorderseite (V) eines Sensorträgers (8) zwischen einer ersten und einer zweiten Guardelektrode (91, 92) angeordnet ist,
wobei auf einer Hinterseite (H) oder einer Zwischenschicht (Z) des Sensorträgers (8) eine dritte Guardelektrode (93) angeordnet ist, wobei die dritte Guardelektrode (93) mindestens die Messelektrode (8) überdeckt, insbesondere die Messelektrode (3) sowie die erste und zweite Guardelektrode (91, 92) überdeckt,
**dadurch gekennzeichnet, dass** die Messelektrode (3) sowie die erste und zweite Guardelektrode (91, 92) zwischen einer ersten und einer zweiten Masseelektrode (101, 102) angeordnet sind, wobei die erste und zweite Masseelektrode (101, 102) ihrerseits zwischen einer vierten und fünften Guardelektrode (94, 95) angeordnet sind, und wobei die erste und zweite Masseelektrode (101, 102) elektrisch mit der Bodenplatte (4) verbunden sind.

2. Vorrichtung nach Anspruch 1, wobei die Messelektrode (3) oberhalb einer Guardelektrode (9) angeordnet ist, wobei sich die Guardelektrode (9) insbesondere zwischen der Messelektrode (3) und der Bodenplatte (4) befindet.

3. Vorrichtung nach Anspruch 1 oder 2, wobei die Messelektrode (3), die Guardelektroden (91, 92, 93, 94, 95) und die Masseelektroden (101, 102) streifenförmig ausgeführt sind, und beim Betrieb der Vorrichtung vertikal und insbesondere parallel zu einer Längsachse (a) des Flüssigkeitsbehälters (1), insbesondere des Probenröhrchens, ausgerichtet sind.

4. Vorrichtung nach Anspruch 3, wobei die Messelektrode (3) eine Breite im Bereich von 80 % bis 100 % des Durchmessers des Flüssigkeitsbehälters (1), insbesondere des Probenröhrchens, aufweist, und die erste und zweite Guardelektrode (91, 92) insbesondere je eine Breite von über 100 % des Durchmessers des Flüssigkeitsbehälters (1), insbesondere des Probenröhrchens, aufweisen.

5. Vorrichtung nach einem der Ansprüche 1 bis 4, wobei die Sensorelektronikeinheit (7) ein Signalgenerator umfasst, mit welchem ein Signal (s) zum Anregen der Messelektrode (3) erzeugbar ist, wobei das Signal (s) insbesondere ein sinusförmiges Signal mit einer Frequenz im Bereich von 20 kHz bis 400 kHz oder ein treppenstufenförmiges Signal mit einer Frequenz im Bereich von 20 kHz bis 50 kHz ist, wobei die Frequenz insbesondere unterschiedlich einstellbar ist.

6. Vorrichtung nach Anspruch 5, wobei das Signal (s) zum Anregen der Messelektrode (3) ebenfalls zum Anregen der Guardelektroden (91, 92, 93, 94, 95) verwendbar ist, wobei das Signal (s') zum Anregen der Guardelektroden (91, 92, 93, 94, 95) niederohmig ist, und insbesondere mit einem Pufferverstärker (13) mit Spannungsverstärkung 1 aus dem Signal (s) zum Anregen der Messelektrode (3) erzeugbar ist.

7. Vorrichtung nach einem der Ansprüche 1 bis 6, wobei der Sensorträger (8) als Leiterplatte ausgeführt ist, insbesondere als mehrlagige Leiterplatte.

8. Vorrichtung nach Anspruch 7, wobei die Sensorelektronikeinheit (7) auf derselben Leiterplatte untergebracht ist wie der Sensor (2), wobei die Leiterplatte mindesten zwei Zwischenschichten (Z) zwischen der Vorderseite (V) und der Hinterseite (H) aufweist, wobei sich die Messelektrode (3) sowie die erste und zweite Guardelektrode (91, 92) sowie die erste und zweite Masseelektrode (101, 102) sowie die vierte und fünfte Guardelektrode (94, 95) auf der Vorderseite (V) der Leiterplatte befinden, die dritte Guardelektrode (93) sich auf einer ersten Zwischenschicht hinter der Vorderseite (V) befindet, eine Massefläche (11) als Abschirmung sich auf einer zweiten Zwischenschicht hinter der ersten Zwischenschicht befindet, wobei die Abschirmung mit der ersten und zweiten Masseelektrode (101, 102) elektrisch verbunden ist, und Leiterbahnen für eine Signalführung der Sensorelektronikeinheit (7) sich auf der Hinterseite (H) und allenfalls einer oder mehrerer weiteren Zwischenschichten zwischen der Hinterseite (H) und der Massenfläche (11) befinden.

9. Vorrichtung nach einem der Ansprüche 1 bis 8, weiter umfassend eine Auswerteeinheit (A), welche dazu ausgeführt ist, basierend auf der Kapazität mindestens eines aus folgender Liste zu erkennen:
- einen Füllstand des Flüssigkeitsbehälters (1), insbesondere des Probenröhrchens, insbesondere ob der Flüssigkeitsbehälter (1), insbesondere das Probenröhrchen, leer ist und/oder einen vorgegebenen Füllstand über- oder unter schreitet;
- ob sich ein Flüssigkeitsbehälter (1), insbesondere ein Probenröhrchen, in der mindestens einen Aufnahme (6) befindet;
- unterschiedliche Trägereinheiten (5), wie z.B. Trägereinheiten (5) für unterschiedlich grosse Flüssigkeitsbehälter (1), insbesondere Probenröhrchen;
- unterschiedliche Merkmale an einer Trägereinheit (5), wie z.B. einzelne Aufnahmen (6), insbesondere Unterteilungen zwischen den Aufnahmen (6).

10. Vorrichtung nach einem der Ansprüche 1 bis 9, weiter umfassend:
- eine optische Erkennungseinheit (14) mit einem optischen Sensorelement; und
- eine Steuereinheit (15) zum Steuern der optischen Erkennungseinheit (14),
wobei die Steuereinheit (15) mit der Sensorelektronikeinheit (7) bzw. der Auswerteeinheit (A) verbunden ist, und von der Sensorelektronikeinheit (7) bzw. der Auswerteeinheit (A) ein Steuersignal (sc) in Abhängigkeit von der Kapazität erzeugbar ist, und die optische Erkennungseinheit (14) in Abhängigkeit des Steuersignals (sc) steuerbar ist, insbesondere ein Prozess zum Erkennen von Kennzeichen (K) an und/oder Merkmalen von dem Flüssigkeitsbehälter (1), insbesondere einem Probenröhrchen, und/oder von einem/einer darin befindlichen Reagenz oder Probe auslösbar ist.

11. Vorrichtung nach einem der Ansprüche 1 bis 10, wobei die Messelektrode (3) neben der Bodenplatte (4) angeordnet ist.

12. Verfahren zur kapazitiven Füllstandsmessung in Flüssigkeitsbehältern (1), insbesondere Behälter für Reagenzien oder Probenröhrchen, umfassend die Schritte:
- Bereitstellen einer leitenden Bodenplatte (4), welche horizontal angeordnet ist, und eines Sensors (2) mit einer Messelektrode (3), welche vertikal angeordnet ist, und einer Sensorelektronikeinheit (7), welche mit der Messelektrode (3) und der Bodenplatte (4) verbunden ist;
- Anordnen eines Flüssigkeitsbehälters (1) oder einer Trägereinheit (5) mit mindestens einer Aufnahme (6) zum Aufnehmen eines Flüssigkeitsbehälters (1), insbesondere eines Probenröhrchens, auf der Bodenplatte (4) neben der Messelektrode (3);
- Anregen der Messelektrode (3) mit einem Signal (s);
- Bestimmen eines Messsignals in Abhängigkeit einer Kapazität zwischen der Messelektrode (3) und der Bodenplatte (4); und
- Bestimmen eines Füllstands des Flüssigkeitsbehälters (1), insbesondere eines Probenröhrchens, welches sich in der Trägereinheit (5) befindet, basierend auf dem Messsignal,
wobei die Messelektrode (3) auf einer Vorderseite (V) eines Sensorträgers (8) zwischen einer ersten und einer zweiten Guardelektrode (91, 92) angeordnet ist,
wobei auf einer Hinterseite (H) oder einer Zwischenschicht (2) des Sensorträgers (8) eine dritte Guardelektrode (93) angeordnet ist, wobei die dritte Guardelektrode (93) mindestens die Messelektrode (8) überdeckt, insbesondere die Messelektrode (3) sowie die erste und zweite Guardelektrode (91, 92) überdeckt,
**dadurch gekennzeichnet, dass** die Messelektrode (3) sowie die erste und zweite Guardelektrode (91, 92) zwischen einer ersten und einer zweiten Masseelektrode (101, 102) angeordnet sind, und wobei die erste und zweite Masseelektrode (101, 102) ihrerseits zwischen einer vierten und fünften Guardelektrode (94, 95) angeordnet sind, und wobei die erste und zweite Masseelektrode (101, 102) elektrisch mit der Bodenplatte (4) verbunden sind.

13. Verfahren nach Anspruch 12, weiter umfassend den Schritt:
- Bewegen einer Trägereinheit (5) mit einer Vielzahl von Aufnahmen (6) zum Aufnehmen von Probenröhrchen (1) in horizontaler Richtung an der Messelektrode (3) vorbei,
wobei das Bestimmen des Messsignals während dem Bewegen der Trägereinheit (5) an der Messelektrode (3) vorbei geschieht.

14. Verfahren nach Anspruch 12 oder 13, weiter umfassend mindestens einer der folgenden Schritte:
- Erkennen ob sich ein Probenröhrchen (1) in einer bestimmten Aufnahme der Trägereinheit (5) befindet basierend auf dem Messsignal;
- Erkennen was für ein Typ Probenröhrchen (1) sich in einer bestimmten Aufnahme (6) der Trägereinheit (5) befindet basierend auf dem Messsignal;
- Erkennen um was für eine Art Trägereinheit (5) es sich handelt basierend auf dem Messsignal, wie z.B. eine Trägereinheit (5) geeignet zum Aufnehmen von Probenröhrchen (1) einer bestimmten Grösse bzw. maximalen Füllmenge.

## Claims

1. Device for capacitive filling level measurement in liquid containers (1), in particular containers for reagents or sample tubes, comprising:
- a sensor (2) with a measuring electrode (3);
- a conductive base plate (4) suitable for arranging at least one liquid container (1) or a carrier unit (5) with at least one receptacle (6) for receiving a liquid container (1), in particular a sample tube; and
- a sensor electronics unit (7), which is connected to the measuring electrode (3) and the base plate (4) and is adapted to determine a capacitance between the measuring electrode (3) and the base plate (4),
wherein the measuring electrode (3) is essentially perpendicular to the base plate (4), is in particular arranged vertically to the horizontally arranged base plate (4),
wherein the measuring electrode (3) is arranged on a front side (V) of a sensor carrier (8) between a first and a second guard electrode (91, 92),
wherein a third guard electrode (93) is arranged on a back side (H) or an intermediate layer (Z) of the sensor carrier (8), wherein the third guard electrode (93) covers at least the measuring electrode (3), in particular covers the measuring electrode (3) and the first and second guard electrode (91, 92),
**characterized in that** the measuring electrode (3) and the first and second guard electrode (91, 92) are arranged between a first and a second ground electrode (101, 102), wherein the first and second ground electrode (101, 102) in turn are arranged between a fourth and fifth guard electrode (94, 95), and wherein the first and second ground electrode (101, 102) are electrically connected to the base plate (4).

2. Device according to claim 1, wherein the measuring electrode (3) is arranged above a guard electrode (9), wherein the guard electrode (9) is in particular located between the measuring electrode (3) and the base plate (4).

3. Device according to claim 1 or 2, wherein the measuring electrode (3), the guard electrodes (91, 92, 93, 94, 95) and the ground electrodes (101, 102) are strip-shaped, and when operating the device are aligned vertically and in particular parallel to a longitudinal axis (a) of the liquid container (1), in particular the sample tube.

4. Device according to claim 3, wherein the measuring electrode (3) has a width in the range from 80% to 100% of the diameter of the liquid container (1), in particular the sample tube, and the first and second guard electrode (91, 92) in particular each have a width of over 100% of the diameter of the liquid container (1), in particular the sample tube.

5. Device according to any one of claims 1 to 4, wherein the sensor electronics unit (7) comprises a signal generator with which a signal (s) for exciting the measuring electrode (3) can be generated, wherein the signal (s) is in particular a sinusoidal signal with a frequency in the range from 20 kHz to 400 kHz or a stair-level signal with a frequency in the range from 20 kHz to 50 kHz, wherein the frequency is in particular differently adjustable.

6. Device according to claim 5, wherein the signal (s) for exciting the measuring electrode (3) is also suitable for exciting the guard electrodes (91, 92, 93, 94, 95), wherein the signal (s') for exciting the guard electrodes (91, 92, 93, 94, 95) is low-impedance, and can in particular be generated with a buffer amplifier (13) with voltage gain 1 from the signal (s) for exciting the measuring electrode (3).

7. Device according to any one of claims 1 to 6, wherein the sensor carrier (8) is designed as a printed circuit board, in particular as a multi-layer printed circuit board.

8. Device according to claim 7, wherein the sensor electronics unit (7) is located on the same printed circuit board as the sensor (2), wherein the printed circuit board has at least two intermediate layers (Z) between the front side (V) and the back side (H), wherein the measuring electrode (3) and the first and second guard electrode (91, 92) and the first and second ground electrode (101, 102) and the fourth and fifth guard electrode (94, 95) are located on the front side (V) of the printed circuit board, the third guard electrode (93) is located on a first intermediate layer behind the front side (V), a ground surface (11) as a shield is located on a second intermediate layer behind the first intermediate layer, wherein the shield is electrically connected to the first and second ground electrode (101, 102), and traces for signal routing of the sensor electronics unit (7) are located on the back side (H) and at most one or more further intermediate layers between the back side (H) and the ground surface (11).

9. Device according to any one of claims 1 to 8, further comprising an evaluation unit (A), which is adapted to recognize based on the capacitance at least one from the following list:
- a filling level of the liquid container (1), in particular of the sample tube, in particular whether the liquid container (1), in particular the sample tube, is empty and/or exceeds or falls below a predetermined filling level;
- whether a liquid container (1), in particular a sample tube, is located in the at least one receptacle (6);
- different carrier units (5), such as carrier units (5) for liquid containers (1), in particular sample tubes, of different sizes;
- different characteristics on a carrier unit (5), such as individual receptacles (6), in particular subdivisions between the receptacles (6).

10. Device according to any one of claims 1 to 9, further comprising:
- an optical recognition unit (14) with an optical sensor element; and
- a control unit (15) for controlling the optical recognition unit (14),
wherein the control unit (15) is connected to the sensor electronics unit (7) or the evaluation unit (A), and a control signal (sc) is generated as a function of the capacitance by the sensor electronics unit (7) or the evaluation unit (A), and the optical recognition unit (14) is controllable as a function of the control signal (sc), in particular a process for recognizing characteristics (K) on and/or features of the liquid container (1), in particular a sample tube, and/or of a reagent or sample contained therein is triggerable.

11. Device according to any one of claims 1 to 10, wherein the measuring electrode (3) is arranged next to the base plate (4).

12. Method for capacitive filling level measurement in liquid containers (1), in particular containers for reagents or sample tubes, comprising the steps:
- providing a conductive base plate (4), which is arranged horizontally, and a sensor (2) with a measuring electrode (3), which is arranged vertically, and a sensor electronics unit (7), which is connected to the measuring electrode (3) and the base plate (4);
- arranging a liquid container (1) or a carrier unit (5) with at least one receptacle (6) for receiving a liquid container (1), in particular a sample tube, on the base plate (4) next to the measuring electrode (3);
- exciting of the measuring electrode (3) with a signal (s) ;
- determining a measurement signal as a function of a capacitance between the measuring electrode (3) and the base plate (4); and
- determining a filling level of the liquid container (1), in particular a sample tube located in the carrier unit (5), based on the measurement signal,
wherein the measuring electrode (3) is arranged on a front side (V) of a sensor carrier (8) between a first and a second guard electrode (91, 92),
wherein a third guard electrode (93) is arranged on a back side (H) or an intermediate layer (Z) of the sensor carrier (8), wherein the third guard electrode (93) covers at least the measuring electrode (3), in particular covers the measuring electrode (3) and the first and second guard electrode (91, 92),
**characterized in that** the measuring electrode (3) and the first and second guard electrode (91, 92) are arranged between a first and a second ground electrode (101, 102), and wherein the first and second ground electrode (101, 102) in turn are arranged between a fourth and fifth guard electrode (94, 95), and wherein the first and second ground electrode (101, 102) are electrically connected to the base plate (4).

13. The method according to claim 12, further comprising the step:
- moving a carrier unit (5) with a plurality of receptacles (6) for receiving sample tubes (1) in a horizontal direction past the measuring electrode (3),
wherein the determination of the measurement signal takes place during the movement of the carrier unit (5) past the measuring electrode (3).

14. The method according to claim 12 or 13, further comprising at least one of the following steps:
- recognizing if a sample tube (1) is in a specific receptacle of the carrier unit (5) based on the measurement signal;
- recognizing what type of sample tube (1) is in a particular receptacle (6) of the carrier unit (5) based on the measurement signal;
- recognizing what kind of carrier unit (5) it is based on the measurement signal, such as a carrier unit (5) suitable for receiving sample tubes (1) of a certain size or maximum filling quantity.

## Revendications

1. Dispositif de mesure capacitive de niveau de remplissage dans des récipients de liquide (1), en particulier des récipients pour réactifs ou des tubes à essai, comprenant :
- un capteur (2) pourvu d'une électrode de mesure (3) ;
- un socle conducteur (4) adapté pour disposer au moins un récipient de liquide (1) ou une unité de support (5) pourvue d'au moins un logement (6) pour recevoir un récipient de liquide (1), en particulier un tube à essai ; et
- une unité électronique de capteur (7) qui est raccordée à l'électrode de mesure (3) et au socle (4) et qui est conçue pour déterminer une capacité entre l'électrode de mesure (3) et le socle (4),
dans lequel l'électrode de mesure (3) est agencée de manière sensiblement perpendiculaire au socle (4), en particulier verticalement par rapport au socle (4) agencé horizontalement,
dans lequel l'électrode de mesure (3) est agencée sur une face avant (V) d'un support de capteur (8) entre une première et une deuxième électrode de garde (91, 92),
dans lequel une troisième électrode de garde (93) est agencée sur une face arrière (H) ou sur une couche intermédiaire (Z) du support de capteur (8), la troisième électrode de garde (93) recouvrant au moins l'électrode de mesure (3), et recouvrant en particulier l'électrode de mesure (3) ainsi que la première et la deuxième électrode de garde (91, 92),
**caractérisé en ce que** l'électrode de mesure (3) ainsi que la première et la deuxième électrode de garde (91, 92) sont agencées entre une première et une deuxième électrode de masse (101, 102), la première et la deuxième électrode de masse (101, 102) étant agencées quant à elles entre une quatrième et une cinquième électrode de garde (94, 95), la première et la deuxième électrode de masse (101, 102) étant raccordées électriquement au socle (4).

2. Dispositif selon la revendication 1, dans lequel l'électrode de mesure (3) est agencée au-dessus d'une électrode de garde (9), l'électrode de garde (9) étant située en particulier entre l'électrode de mesure (3) et le socle (4).

3. Dispositif selon la revendication 1 ou 2, dans lequel l'électrode de mesure (3), les électrodes de garde (91, 92, 93, 94, 95) et les électrodes de masse (101, 102) sont réalisées sous forme de bandes et sont orientées, pendant le fonctionnement du dispositif, verticalement et en particulier parallèlement à un axe longitudinal (a) du récipient de liquide (1), en particulier du tube à essai.

4. Dispositif selon la revendication 3, dans lequel l'électrode de mesure (3) présente une largeur dans la plage allant de 80 % à 100 % du diamètre du récipient de liquide (1), en particulier du tube à essai, et la première et la deuxième électrode de garde (91, 92) présentent chacune en particulier une largeur supérieure à 100 % du diamètre du récipient de liquide (1), en particulier du tube à essai.

5. Dispositif selon l'une des revendications 1 à 4, dans lequel l'unité électronique de capteur (7) comprend un générateur de signal qui permet de générer un signal (s) pour stimuler l'électrode de mesure (3), le signal (s) étant en particulier un signal sinusoïdal avec une fréquence comprise dans la plage allant de 20 kHz à 400 kHz ou un signal en forme d'escalier avec une fréquence dans la plage allant de 20 kHz à 50 kHz, la fréquence pouvant être réglée différemment.

6. Dispositif selon la revendication 5, dans lequel le signal (s) peut être utilisé pour stimuler l'électrode de mesure (3) comme pour stimuler les électrodes de garde (91, 92, 93, 94, 95), le signal (s') pour stimuler les électrodes de garde (91, 92, 93, 94, 95) possédant une faible valeur ohmique et pouvant être généré en particulier avec un amplificateur tampon (13) avec une amplification de tension 1 depuis le signal (s) pour stimuler l'électrode de mesure (3).

7. Dispositif selon l'une des revendications 1 à 6, dans lequel le support de capteur (8) est réalisé sous la forme d'une carte de circuit imprimé, en particulier une carte de circuit imprimé multicouches.

8. Dispositif selon la revendication 7, dans lequel l'unité électronique de capteur (7) est installée sur la même carte de circuit imprimé que le capteur (2), la carte de circuit imprimé présentant au moins deux couches intermédiaires (Z) entre la face avant (V) et la face arrière (H), l'électrode de mesure (3), la première et la deuxième électrode de garde (91, 92), la première et la deuxième électrode de masse (101, 102) ainsi que la quatrième et la cinquième électrode de garde (94, 95) se trouvant sur la face avant (V) de la carte de circuit imprimé, la troisième électrode de garde (93) se trouvant sur une première couche intermédiaire derrière la face avant (V), une surface de masse (11) faisant office de blindage se trouvant sur une deuxième couche intermédiaire derrière la première couche intermédiaire, le blindage étant relié électriquement avec la première et la deuxième électrode de masse (101, 102), et les circuits pour la transmission du signal de l'unité électronique de capteur (7) se trouvant sur la face arrière (H) et le cas échéant une ou plusieurs autres couches intermédiaires se trouvant entre la face arrière (H) et les surfaces de masse (11).

9. Dispositif selon l'une des revendications 1 à 8, comprenant en outre une unité d'évaluation (A) qui est conçue pour détecter, sur la base de la capacité, au moins un élément parmi les éléments de la liste suivante :
- un niveau de remplissage du récipient de liquide (1), en particulier du tube à essai, en particulier détecter si le récipient de liquide (1), en particulier le tube à essai, est vide et/ou s'il est au-dessus ou en dessous d'un niveau de remplissage prédéfini ;
- si un récipient de liquide (1), en particulier un tube à essai, se trouve dans le au moins un logement (6) ;
- différentes unités de support (5), comme par exemple des unités de support (5) pour des récipients de liquide (1), en particulier des tubes à essai, de tailles différentes ;
- différentes caractéristiques sur une unité de support (5), comme par exemple certains logements (6), en particulier des séparations entre les logements (6).

10. Dispositif selon l'une des revendications 1 à 9, comprenant en outre :
- une unité de détection optique (14) pourvue d'un élément de capteur optique ; et
- une unité de commande (15) pour commander l'unité de détection optique (14),
dans lequel l'unité de commande (15) est raccordée à l'unité électronique de capteur (7) ou à l'unité d'évaluation (A), un signal de commande (sc) pouvant être généré par l'unité électronique de capteur (7) ou par l'unité d'évaluation (A) en fonction de la capacité, et l'unité de détection optique (14) pouvant être commandée en fonction du signal de commande (sc), un processus pour détecter des signes distinctifs (K) sur et/ou des caractéristiques du récipient de liquide (1), en particulier d'un tube à essai, et/ou d'un réactif ou d'un échantillon se trouvant à l'intérieur pouvant en particulier être déclenché.

11. Dispositif selon l'une des revendications 1 à 10, dans lequel l'électrode de mesure (3) est agencée à côté du socle (4).

12. Procédé pour mesurer de façon capacitive le niveau de remplissage de récipients de liquide (1), en particulier de récipients pour réactifs ou des tubes à essai, comprenant les étapes consistant à :
- fournir un socle conducteur (4) agencé de façon horizontale, un capteur (2) pourvu d'une électrode de mesure (3) agencée verticalement, et une unité électronique de capteur (7) raccordée à l'électrode de mesure (3) et au socle (4) ;
- installer un récipient de liquide (1) ou une unité de support (5) pourvue d'au moins un logement (6) destiné à recevoir un récipient de liquide (1), en particulier un tube à essai, sur le socle (4) à côté de l'électrode de mesure (3) ;
- stimuler l'électrode de mesure (3) avec un signal (s) ;
- déterminer un signal de mesure en fonction d'une capacité entre l'électrode de mesure (3) et le socle (4) ; et
- déterminer, sur la base d'un signal de mesure, un niveau de remplissage du récipient de liquide (1), en particulier d'un tube à essai, qui se trouve dans l'unité de support (5),
dans lequel l'électrode de mesure (3) est agencée sur une face avant (V) d'un support de capteur (8) entre une première et une deuxième électrode de garde (91, 92),
dans lequel une troisième électrode de garde (93) est agencée sur une face arrière (H) ou sur une couche intermédiaire (Z) du support de capteur (8), la troisième électrode de garde (93) recouvrant au moins l'électrode de mesure (3), en particulier l'électrode de mesure (3) ainsi que la première et la deuxième électrode de garde (91, 92), **caractérisé en ce que** l'électrode de mesure (3) ainsi que la première et la deuxième électrode de garde (91, 92) sont agencées entre une première et une deuxième électrode de masse (101, 102), la première et la deuxième électrode de masse (101, 102) étant agencées quant à elles entre une quatrième et une cinquième électrode de garde (94, 95), et la première et la deuxième électrode de masse (101, 102) étant raccordées électriquement au socle (4).

13. Procédé selon la revendication 12, comprenant en outre l'étape consistant à :
- déplacer une unité de support (5) munie d'une multitude de logements (6) destinés à recevoir des tubes à essai (1), dans le sens horizontal devant l'électrode de mesure (3),
dans lequel la détermination du signal de mesure intervient pendant le déplacement de l'unité de support (5) devant l'électrode de mesure (3).

14. Procédé selon la revendication 12 ou 13, comprenant en outre au moins l'une des étapes suivantes consistant à :
- détecter, sur la base du signal de mesure, si un tube à essai (1) se trouve dans un logement défini de l'unité de support (5) ;
- détecter, sur la base du signal de mesure, quel type de tube à essai (1) se trouve dans un logement défini (6) de l'unité de support (5) ;
- déterminer, sur la base du signal de mesure, de quel type d'unité de support (5) il s'agit, comme par exemple une unité de support (5) adaptée pour recevoir des tubes à essai (1) d'une certaine taille ou encore le niveau de remplissage maximum.
